# EUROPÄISCHE PATENTSCHRIFT

(11) **EP 0 824 495 B1**
(45) Veröffentlichungstag und Bekanntmachung des Hinweises auf die Patenterteilung: **29.12.1999**
(21) Anmeldenummer: 96914956.6
(22) Anmeldetag: 19.04.1996
(51) Int. Cl.: B66B 1/34

(54) **VERFAHREN ZUM STEUERN UND ÜBERWACHEN DES BETRIEBES EINER AUFZUGANLAGE UND WÄLZLAGER ZUR ANWENDUNG BEI DEM VERFAHREN**
METHOD OF CONTROLLING AND MONITORING THE OPERATION OF A LIFT INSTALLATION, AND A ROLLER BEARING FOR USE IN THE METHOD
PROCEDE DE COMMANDE ET DE SURVEILLANCE DU FONCTIONNEMENT D'UN ASCENCEUR, ET PALIER A ROULEMENT DESTINE A L'APPLICATION DE CE PROCEDE

(30) Priorität: 21.04.1995 DE 19514801
(43) Veröffentlichungstag der Anmeldung: 25.02.1998
(73) Patentinhaber: WITTUR AUFZUGTEILE GmbH & Co., 85259 Wiedenzhausen (DE)
(72) Erfinder: WITTUR, Horst, D-85757 Karlsfeld (DE); FISCHER, Hubert, D-80637 München (DE)
(74) Vertreter: Herrmann-Trentepohl, Werner, Dipl.-Ing.
(86) Internationale Anmeldenummer: EP9601648
(87) Internationale Veröffentlichungsnummer: WO9633124

(56) Entgegenhaltungen:
- EP-A- 0 405 999
- EP-A- 0 631 140
- EP-A- 0 706 968

## Beschreibung

Die Erfindung betrifft ein Verfahren zum Steuern und Überwachen des Betriebes einer Aufzuganlage. Gegenstand der Erfindung ist außerdem ein Wälzlager zur Anwendung bei dem Verfahren.

Die Steuerung einer Aufzuganlage muß zwei Forderungen erfüllen. Einerseits muß eine Steuerung des Betriebes entsprechend den von den Benutzern eingegebenen Signalen erfolgen, wobei auch spezielle Fahrprogramme zum Einsatz kommen können, andererseits muß die Sicherheit des Betriebes ständig überwacht werden, wozu in erster Linie die Überwachung des Schließzustandes der Türen, die Überwachung der Fahrgeschwindigkeit und der Schutz vor Überbelastung gehören.

Eine solche Steuerung und Überwachung setzt das Erfassen und Verarbeiten bestimmter Eingabewerte voraus, die während des Betriebes fortlaufend ermittelt werden müssen. Dies erfolgt üblicherweise mit Steuerungen und Kontrolleinrichtungen, die eine zeit- und wegeabhängige Erfassung der Betriebsdaten und deren Auswertung zulassen. Dabei geht es im wesentlichen darum, den Fahrkorb in seiner Stellung bzw. seiner Bewegung in dem Schacht möglichst genau zu erfassen und ihn in einer vorbestimmten Position zum Stillstand zu bringen.

Die Erfassung der Stellung bzw. des Bewegungszustandes erfolgt im allgemeinen durch mechanische Anordnungen wie Kopierwerke oder mit dem Fahrkorb direkt verbundene Bänder, Seile o. dgl., über die eine direkte Kontrollfunktion ausgeübt werden kann. Wegen des mechanischen Aufbaus ist jedoch die Einsatzfähigkeit solcher Systeme bei hohen Fahrgeschwindigkeiten und großen Förderhöhen begrenzt.

Es sind weiterhin anders aufgebaute Meßwertgeber bekannt, die über Reibschluß, Riementrieb, Kettenantrieb oder andere Übertragungsarten aus einer Drehbewegung Impulse oder Analog-Spannungen erzeugen, die als Eingabewerte für die Steuerung dienen. Dabei handelt es sich um Anbauvorrichtungen mit Zusatzgeräten, die meist einem gewisssen Schlupf unterliegen und damit z.B. eine umittelbare Endabschaltung in einer Halteposiotion nicht zulassen. Dadurch werden weitere Ab- bzw. Umschalteinrichtungen oder Verdoppelungen der relativ aufwendigen Systeme erforderlich.

EP 0 405 999 offenbart eine Vorrichtung und ein Verfahren zur Erfassung von Betriebsdaten in einer Aufzuganlage, insbesondere der Stellung des Fahrkorbes und dessen Geschwindigkeit. Hierbei werden über eine mit einer Welle verbundenen Kodierscheibe mit zwei Leseköpfen Meßdaten ermittelt und an einen Prozessor übermittelt, der diese Daten in die entsprechenden Informationen über die Stellung des Fahrkorbes und die Geschwindigkeit umwandelt. Zwar können mit diesem System Fehlfunktionen des Antriebs ermittelt werden, die abweichende Positions- bzw. Geschwindigkeitswerten zur Folge haben, jedoch können keine Fehlfunktionen sonstiger Bauteile einer Aufzugsanlage ermittelt werden, die andere Auswirkungen haben. Im Gegensatz zur vorliegenden Erfindung ist diese Vorrichtung auch vorzugsweise zur Ermittlung von Betriebsdaten in einem Aufzugasystem und nicht zur Überwachung dieses Systems gedacht.

Es ist Aufgabe der Erfindung, ein Verfahren zur Steuerung und Überwachung einer Aufzuganlage sowie ein Wälzlager zur Durchführung dieses Verfahrens zu schaffen, bei dem die Steuerungs- und Überwachungsfunktion der Anlage sowohl über die Erfassung von Bewegungs- und/oder Drehverstellungszuständen gegeneinander verdrehbarer Bauteile mit in Wälzlagern zwischen den Bauteilen integrierten Impulsgebern erfolgt als auch über andere alternative Mittel zur Signalerfassung. Es ist weiterhin Aufgabe der Erfindung, ein Verfahren zur Steuerung und Überwachung einer Aufzuganlage und ein Wälzlager zur Durchführung des Verfahrens zu schaffen, das die Verdrehzustände vorhandener Bauteile in einer Aufzuganlage (z. B. Seilscheibe oder Umlenkrollen) zur Signalermittlung verwendet, wobei das Wälzlager leicht in den Bauraum vorhandener Lager integriert werden kann und die Funktionstüchtigkeit der einzelnen Bauteile gleichzeitig überwacht wird (werden kann).

Die Losung der Aufgabe erfolgt durch die Merkmale des Anspruchs 1 sowie durch ein Wälzlager nach dem Anspruch 15.

Die Erfindung geht davon aus, daß in einer Aufzuganlage eine Vielzahl von Drehantrieben zur Betätigung der verschiedenen Bauteilgruppen, insbesondere des Fahrkorbs sowie der Kabinen- und Schachttüren vorhanden sind. Die drehenden Teile solcher Drehantriebe, z.B. die Welle des Antriebsmotors oder ein Glied eines Getriebes, sind dabei in aller Regel in Wälzlagern gelagert. Der Drehverstellungszustand eines drehenden Teils, sei es statisch oder dynamisch, gibt somit einen Wert wieder, der dem statischen oder dynamischen Zustand des angetriebenen Teils entspricht.

Beispielsweise erfolgt der Antrieb des Fahrkorbs meist durch eine Seilscheibe, über die die Tragseile verlaufen. Wenn die Zahl der Umdrehungen der Seilscheibe gezählt wird, entspricht jeder einzelne Zählwert einer bestimmten Stellung des Fahrkorbs im Schacht. Wird dagegen die Drehgeschwindigkeit der Seilscheibe gemessen, so ist dies ein die Fahrgeschwindigkeit des Fahrkorbes wiedergebender Wert.

Erfindungsgemäß werden die Bewegungs- und/oder Drehverstellungszustände gegeneinander verdrehbarer Bauteile mit Hilfe von Impulsgebern erfaßt, die in Walzlagern zwischen diesen Bauteilen integriert sind, und die erfaßten Impulswerte werden mit Hilfe eines Rechners in die zur Steuerung und Überwachung der Anlage dienenden Daten umgewandelt.

Wälzlager mit integriertem Impulsgeber sind bekannt, vgl. z.B. EP 0631140 A1. Dabei ist an dem umlaufenden Ring des Lagers ein Kodierer in Form einer Ringes aus Magnetwerkstoff angebracht, auf dem Nord- und Südpole aufmagnetisiert sind, die ein sinusförmiges Magnetfeld erzeugen. An einer Stelle des feststehenden Lagerringes befindet sich ein mit einem elektrischen Anschluß versehener Sensor, in dem bei Drehung des Magnetringes Impulse erzeugt werden. Die Zahl der pro Umdrehung erzeugten Impulse entspricht der Zahl der auf dem Magnetring befindlichen Pole. Durch Zählen der Impulse in einer geeigneten Auswerteschaltung kann die Anzahl der Umdrehungen und die jeweilige Winkelstellung des drehenden Teils errechnet werden. Die Pulsfrequenz bei der Drehung ist ein Maß für die Umdrehungsgeschwindigkeit.

Der Einsatz derartiger Lager eröffnet vielfältige Möglichkeiten für die Steuerung und Überwachung einer Aufzuganlage. So kann die Bewegungsgeschwindigkeit des Fahrkorbs durch einen Impulsgeber in einem Lager des Hauptmotors, der Seilscheibe oder einer Umlenkrolle erfaßt werden. Ferner kann die Geschwindigkeit auch unmittelbar an dem Fahrkorb gemessen werden, indem auf die beschriebene Weise die Drehgeschwindigkeit einer oder mehrerer Führungsrollen gemessen wird. Schließlich eignet sich für die Ermittlung der Fahrgeschwindigkeit auch das Lager an der Umlenkrolle für ein Geschwindigkeitsbegrenzerseil, das aus Sicherheitsgründen zusätzlich und unabhängig von den Tragseilen vorhanden ist.

In gleicher Weise wie die Geschwindigkeit des Fahrkorbs kann auch dessen Stellung im Schacht festgestellt werden, indem die Impulszahl aus mindestens einem der vorgenannten Lager gezählt und umgerechnet wird. Da die Zahl der Impulse je nach dem abgefragten Lager sehr hoch sein kann und damit ein einzelner Impuls das Maß für eine sehr kurze Wegstrecke des Fahrkorbs ist, kann eine sehr feinfühlige Wegesteuerung erfolgen. Ferner können durch getrennte Erfassung des Fahrkorbweges, etwa durch die Führungsrollen und die Seilscheibe, und durch einen Abgleich der Meßwerte ein Seilschlupf und Seillängungen ausgeglichen werden.

Ferner können auch die Kabinen- und Schachttüren auf die erfindungsgemäße Weise gesteuert und überwacht werden. Der Antrieb der Türen erfolgt meist über Seilzüge mit entsprechenden Drehantrieben, in die mindestens ein Wälzlager mit einem Impulsgeber eingebaut werden kann. Aus der gezählten Impulszahl kann der Öffnungzustand der jeweiligen Tür festgestellt und in die Betriebs- und Sicherheitssteuerung mit einbezogen werden.

Da die Lager mit integriertem Impulsgeber die Abmessungen üblicher, genormter Lager haben, ist auch eine Umrüstung bestehender Aufzuganlagen auf das erfindungsgemäße Steuerungs- und Überwachungsverfahren ohne übermäßigen Aufwand möglich.

Die Erfindung wird nachfolgend am Beispiel einer in der Zeichnung dargestellten Aufzuganlage näher erläutert.

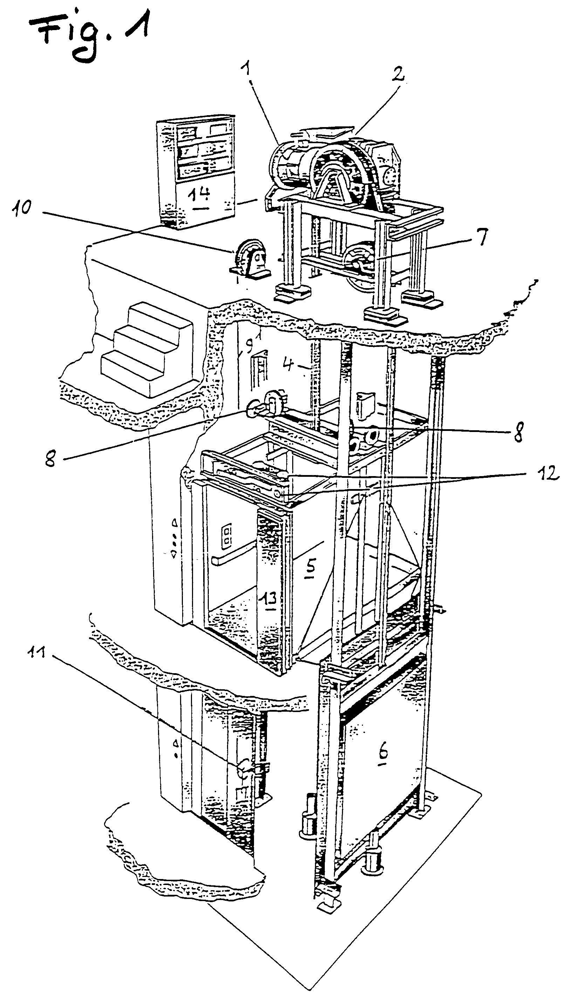

- Fig. 1: zeigt eine Aufzuganlage in einer schematischen Prinzipdarstellung;
- Fig. 2: zeigt ein bei dem erfindungsgemäßen Verfahren einsetzbares Wälzlager.

Die Aufzuganlage hat einen über dem obersten Stockwerk angeordneten Hauptantriebsmotor 1 mit einer an diesem über ein Getriebe gekuppelten Seilscheibe 2. Die darüber gelegten, parallel verlaufenden Seile tragen einerseits den Fahrkorb 5, andererseits das Gegengewicht 6, wobei das das Gegengewicht haltende Seiltrum über eine Umlenkscheibe 7 geführt ist. Der Fahrkorb 5 ist an zwei Seiten sowie oben und unten mit Führungsrollen 8 versehen, die unter Federdruck an den Schachtführungen laufen.

Die Aufzuganlage weist ferner eine Sicherheitseinrichtung zur Geschwindigkeitsbegrenzung auf. Diese Einrichtung ist, um auch in dem unwahrscheinlichen Fall eines Bruchs aller Seile oder der Seilbefestigung wirksam sein zu können, vom Antrieb, der Aufhängung und der Führung des Fahrkorbes unabhängig. Sie besteht bei der dargestellten Ausführungsform aus einem Seil 9, das mit beiden Enden an dem Fahrkorb festgelegt und zum Bilden einer Schlaufe um eine obere Umlenkrolle 10 und eine untere Umlenkrolle 11 geführt ist. Neben der vorgeschriebenen Funktion, eine Übergeschwindigkeit über einen Kontakt an den Sicherheitskreis zu melden, wird bei bekannten Systemen die Laufgeschwindigkeit mittels zusätzlich angebauter Geräte, wie Tachos oder Impulsgeber, erfaßt.

Der Fahrkorb 5 weist eine mechanisch betätigte Kabinentür auf, deren Antrieb auf dem Dach des Fahrkorbs angeordnet ist und u.a. Rollen 12 zum Bewegen der Tür sowie zum Betätigen einer Verriegelung aufweist. Aufjedem Stockwerk ist der Kabinentür gegenüberliegend eine Schachttür 13 vorhanden, deren Antrieb ähnlich ausgestaltet und zur besseren Übersicht in der Zeichnung nicht dargestellt ist.

Die Steuerung und Überwachung aller Abläufe erfolgt in einer zentralen Steueranlage 14, die über nicht dargestellte Strom-, Steuer- und Signalleitungen mit dem Antrieb, dem Fahrkorb und den Bedienungsfeldern bei den Schachttüren verbunden ist.

Wie aus der vorstehenden Beschreibung hervorgeht, weist die insoweit herkömmliche Aufzuganlage zahlreiche rotiernde Bauteile auf, wie die Wellen von Elektromotoren, Seilscheiben und -rollen, Laufrollen u.dgl. Diese rotierenden Bauteile sind in aller Regel mit Wälzlagern, insbesondere Kugellagern gelagert, wobei entweder der innere Lagerring feststeht und der äußere rotiert oder umgekehrt. Diese Lager können durch Einbeziehung eines Impulsgebers in vielfacher Weise zur Steuerung und/oder Überwachung der Aufzuganlage nutzbar gemacht werden.

So eignet sich das Lager der Welle des Hauptantriebsmotors 1 und/oder das Lager der Seilscheibe 2 und/oder das Lager der Umlenkscheibe 7 zur Erfassung der Impulsfrequenz und deren Umrechnung in die Fahrgeschwindigkeit mittels eines in der Steueranlage 14 vorhandenen Rechners. Die Erfassung und Verarbeitung der Impulse erfolgt dabei richtungsabhängig.

Ferner kann an einer oder beiden der Umlenkrollen 10 und 11 für das Seil 9 der Geschwindigkeitsbegrenzung eine Erfassung der Impulsfrequenz erfolgen. Ein Vergleich der ermittelten Werte untereinander und mit den aus dem Antriebssystem erhaltenen Geschwindigkeitswerten läßt das Auftreten eines Seilschlupfes unmittelbar und quantitativ erkennen, so daß die erforderlichen Steuerungsmaßnahmen automatisch eingeleitet werden können.

Ebenso wie die Geschwindigkeit des Fahrkorbs 5 läßt sich über Impulsgeber in bestimmten Wälzlagern auch dessen Stellung im Schacht feststellen. Hierzu ist es erforderlich, anstelle der Frequenz oder zusätzlich dazu die Zahl der Impulse zu erfassen und in einem Addierwerk richtungsabhängig aufzuaddieren. Zur Erfassung der Impulszahl eignen sich prinzipiell dieselben Lager wie zur Erfassung der Fahrgeschwindigkeit mittels Messung der Pulsfrequenz. Auch hier ist ein Vergleich der aus dem Hauptantriebssystem erhaltenen Werte mit denen der Einrichtung zur Geschwindigkeitsbegrenzung möglich, um einen Seilschlupfund Seillängungen auszugleichen.

Die Fahrstreckenmessung kann durch die Auswahl geeigneter Lager mit Impulsgebern und durch ein entsprechend angelegtes Rechenprogramm so exakt erfolgen, daß damit auch die Haltepositionen bestimmt und angefahren werden können, ohne daß mechanische Kontaktgeber im Schacht erforderlich sind.

Eine weitere Möglichkeit zur Geschwindigkeits- und Streckenmessung bieten die Lager der Führungrollen 8, mit denen der Fahrkorb 5 an den Führungsschienen im Schacht geführt wird. Die Umdrehungszahl und -geschwindigkeit dieser Führungrollen steht in unmittelbarem Verhältnis zu der vom Fahrkorb 5 zurückgelegten Strecke, so daß Impulswerte, die von Impulsgebern in diesen Lagern abgeleitet werden, in Strecken-und und Geschwindigkeitswerte umgerechnet werden können. Etwa auftretende Ungenauigkeiten können dadurch ausgeglichen werden, daß man die Meßwerte aus mindestens zwei Führungrollen erfaßt und Differenzen eliminiert.

Impulsgeber in den Lagern der Führungrollen 8 eignen sich auch gut zur Erfassung von Werten zum Vergleich mit Meßwerten aus dem Hauptantriebssystem und der Sicherheitseinrichtung.

Auch die Steuerung und Überwachung der Aufzugtüren kann mittels Impulsgebern in dafür geeigneten Lagern erfolgen. Hierfür kommen insbesondere die Lager der Rollen 12 in Frage, die für den Antrieb der Türen zum Öffnen und Schließen sowie zur Betätigung von Verriegelungselementen vorgesehen sind. Durch Verarbeitung der Meßwerte kann dabei der Betrieb der Kabinentür auf den der Schachttüren 13 abgestimmt werden.

Es ist allgemein bekannt, daß die meisten Störungen in einer Aufzuganlage im Türenbereich liegen. Das erfindungsgemäße Verfahren ermöglicht es, eine sich anbahnende Störung rechtzeitig zu erkennen. So ist z.B. durch einen Vergleich aller Türabläufe zu erkennen, ob eine Seilrolle wiederholt andere Impulsreihen aufweist. Daraus kann dann der Schluß gezogen werden, daß entweder das Lager selbst oder die Seilspannung defekt ist. Durch rechtzeitiges Melden einer solchen Störung kann eine Inspektion oder Reparatur durchgeführt werden, bevor ein Stillegen der gesamten Anlage erforderlich wird.

Das erfindungsgemäße Verfahren braucht nicht auf eine einzelne Aufzuganlage beschränkt zu sein, sondern kann auch mehrere nebeneinander oder an unterschiedlichen Stellen betriebene Aufzüge erfassen. So ist es auch möglich, beispielsweise in größeren Gebäudekomplexen eine Vielzahl von Aufzügen zentral zu überwachen.

Die Wälzlager mit integriertem Impulsgeber entsprechen mit ihren Einbaumaßen den üblichen Lagern. Bei bekannten Wälzlagern mit stationärem Außenring entsprechen die Einbaumaße den üblichen Lagermaßen. Es muß lediglich Platz zum Verlegen der von dem Sensor kommenden Signalleitung vorhanden sein. In einer Komplettanlage, wie sie vorstehend beschrieben ist, kommen auch Lager mit umgekehrter Funktion zum Einsatz, d.h. Lager mit feststehendem Innenring und rotierendem Außenring.

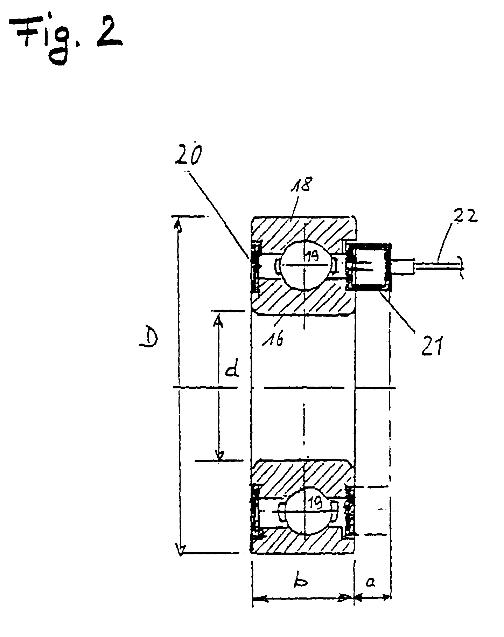

Ein derartiges Lager ist in Fig. 2 gezeigt. Der Innenring 16 liegt in diesem Fall fest, während der Außenring 18 über die Lagerkugeln 19 drehbar ist und beispielsweise eine Führungsrolle 8 trägt. Auf der in Fig. 2 linken Seite ist das Lager mit einem Dichtring 20 abgedichtet. Mit diesen Bauelementen und den Abmessungen D für den Außendurchmesser, d für den Innendurchmesser und b für die axiale Länge stimmt das Lager mit Lagern herkömmlicher Bauart überein.

Auf der in Fig. 2 rechten Seite ist der normale Dichtring durch einen Spezialdichtring 21 ersetzt, der an dem Innenring festliegt und in den der Sensor zur Signalerfassung integriert ist. Dieser Sensor nimmt die Induktionsimpulse des Magnetringes auf, der mit dem äußeren Lagerring 18 umläuft. Die Impulse werden durch die Signalleitung 22 an die Steueranlage 14 übertragen. Das Lager ist somit lediglich um das Maß a gegenüber den Abmessungen herkömmlicher Lager vergrößert. Dieser Bereich in der Längserstreckung des Lagers liegt im allgemeinen nicht im Bereich der Befestigung des Lagers innerhalb einer Konstruktion und kann deswegen für die Signalerfassung und für den elektrischen Anschluß genutzt werden.

Bei der Ausführung mit rotierendem Innenring liegt der Magnetring an dem Innenring 16 fest und läuft mit diesem um, während der Dichtring 21 mit dem Sensor an dem Außenring 18 befestigt ist.

Das erfindungsgemäße Verfahren im Zusammenwirken mit einem hierfür ausgebildeten Lager ermöglicht es auch, eine alternative Signalerfassung, wie Druckwellen und Geräuschfrequenzen eines Lagers, zu nutzen und in logisch verwertbare Impulse umzuwandeln. Die Erfindung ermöglicht darüber hinaus auch eine direkte Abtastung der umlaufenden Kugeln, Kugel- oder Walzenkäfige mit einem Mikro-Laserstrahl über eine Glasfaserleitung.

## Patentansprüche

1. Verfahren zum Steuern und Überwachen des Betriebes einer Aufzuganlage, **dadurch gekennzeichnet, daß** die Bewegungs- und/oder Drehverstellungszustände gegeneinander verdrehbarer Bauteile mit Hilfe von Impulsgebern erfaßt werden, die in Wälzlagern zwischen diesen Bauteilen integriert sind, und daß die erfaßten Impulswerte mit Hilfe eines Rechners in die zur Steuerung und Überwachung der Anlage dienenden Daten umgewandelt werden und zusätzlich alternative Mittel zur Signalerfassung verwendet werden.

2. Verfahren nach Anspruch 1, **dadurch gekennzeichnet, daß** die Fahrgeschwindigkeit des Fahrkorbs (5) durch einen in ein Lager des Antriebsmotors (1) integrierten Impulsgeber erfaßt wird.

3. Verfahren nach Anspruch 1 oder 2, **dadurch gekennzeichnet, daß** die Fahrgeschwindigkeit des Fahrkorbs (5) durch einen in ein Lager der Seilscheibe (2) integrierten Impulsgeber erfaßt wird.

4. Verfahren nach einem der Ansprüche 1 bis 3, **dadurch gekennzeichnet, daß** die Fahrgeschwindigkeit des Fahrkorbs (5) durch einen in ein Lager einer Umlenkrolle (7) integrierten Impulsgeber erfaßt wird.

5. Verfahren nach einem der Ansprüche 1 bis 4, **dadurch gekennzeichnet, daß** die Fahrgeschwindigkeit des Fahrkorbs (5) durch einen in ein Lager einer Führungsrolle (8) integrierten Impulsgeber erfaßt wird.

6. Verfahren nach einem der Ansprüche 1 bis 4, **dadurch gekennzeichnet, daß** die Fahrgeschwindigkeit des Fahrkorbs (5) durch mindestens zwei in die Lager verschiedener Führungsrollen (8) integrierte Impulsgeber erfaßt wird und daß die erfaßten Werte miteinander verglichen und gemittelt werden.

7. Verfahren nach einem der Ansprüche 1 bis 6, **dadurch gekennzeichnet, daß** die Fahrgeschwindigkeit des Fahrkorbs (5) durch einen in ein Lager einer Umlenkrolle (10, 11) für ein Geschwindigkeitsbegrenzerseil (9) integrierten Impulsgeber erfaßt wird.

8. Verfahren nach einem der Ansprüche 1 bis 7, **dadurch gekennzeichnet, daß** die Stellung des Fahrkorbs (5) durch Verwendung mindestens eines der nach den Ansprüchen 1 bis 7 verwendeten Impulsgeber und durch Umrechnung der erfaßten Impulszahl in den Fahrweg des Fahrkorbes ermittelt wird.

9. Verfahren nach einem der Ansprüche 1 bis 8, **dadurch gekennzeichnet, daß** die von dem Fahrkorb (5) zurückgelegte Strecke aus den Impulswerten mindestens eines in ein Lager einer Führungsrolle (8) integrierten Impulsgeber erfaßt wird.

10. Verfahren nach Anspruch 8 oder 9, **dadurch gekennzeichnet, daß** die vom Fahrkorb (5) zurückgelegte Strecke für einen bestimmten Fahrzyklus in entgegengesetzten Richtungen erfaßt und die ermittelten Werte zum Ausgleich von Meßfehlern miteinander verglichen werden.

11. Verfahren nach einem der Ansprüche 8 bis 10, **dadurch gekennzeichnet, daß** durch einen Vergleich der erfaßten Impulszahlen mindestens zweier nach den Ansprüchen 1 bis 7 verwendeter Impulsgeber der Seilschlupf erfaßt und durch Anpassung der Steuerungswerte ausgeglichen wird.

12. Verfahren nach einem der Ansprüche 1 bis 11, **dadurch gekennzeichnet, daß** durch mindestens einen in ein Lager im Antrieb für eine Kabinentür integrierten Impulsgeber die Stellung der Kabinentür erfaßt und in die Sicherheitssteuerung der Aufzuganlage einbezogen wird.

13. Verfahren nach einem der Ansprüche 1 bis 12, **dadurch gekennzeichnet, daß** durch mindestens einen in ein Lager im Antrieb für eine Schachttür (13) integrierten Impulsgeber die Stellung der betreffenden Schachttür erfaßt und in die Sicherheitssteuerung der Aufzuganlage einbezogen wird.

14. Verfahren nach Anspruch 12 oder 13, **dadurch gekennzeichnet, daß** durch mindestens einen in ein Lager im Antrieb für den Türverriegelungsmechanismus integrierten Impulsgeber der Zustand der Türverriegelung erfaßt und in die Sicherheitssteuerung der Aufzuganlage einbezogen wird.

15. Wälzlager zur Durchführung des Verfahrens nach einem der Ansprüche 1 bis 14, **dadurch gekennzeichnet, daß** in einen der den Lagerspalt axial abdeckenden Dichtringe (21) ein Sensor integriert ist, dem ein an dem umlaufenden Lagerring festliegender Magnetring gegenüberliegt und das Walzlager alternative Mittel zur Signalerfassung aufweist.

16. Walzlager nach Anspruch 15, d**adurch gekennzeichnet, daß** der Innenring (16) des Lager feststehend und der Außenring (18) umlaufend ausgebildet ist.

17. Wälzlager nach Anspruch 15 oder 16, **dadurch gekennzeichnet, daß** das Wälzlager als Kugellager ausgebildet ist.

18. Wälzlager zur Durchführung des Verfahrens nach einem der Ansprüche 1 bis 14, **dadurch gekennzeichnet, daß** das Wälzlager einen integrierten Impulsgeber und alternative Mittel zur Signalerfassung aufweist.

19. Wälzlager nach Anspruch 18, **dadurch gekennzeichnet, daß** die alternativen Mittel zur Signalerfassung auf Druckwellen reagieren.

20. Wälzlager nach Anspruch 18, **dadurch gekennzeichnet, daß** die alternativen Mittel zur Signalerfassung auf Geräuschfrequenzen des Lagers reagieren.

21. Wälzlager zur Durchführung des Verfahrens nach einem der Ansprüche 1 bis 14, **dadurch gekennzeichnet, daß** das Wälzlager einen integrierten Impulsgeber und alternative Mittel zur Signalerfassung aufweist, wobei der Impulsgeber einen Mikro-Laser aufweist.

22. Wälzlager nach Anspruch 21, **dadurch gekennzeichnet, daß** die alternativen Mittel zur Signalerfassung eine Glasfaserleitung umfassen.

## Claims

1. Method of controlling and monitoring the operation of a lift installation, characterised in that the movement and/or rotary displacement conditions of mutually rotatable components are detected with the aid of pulse transmitters, which are integrated in roller bearings between these components, and that the detected pulse values are converted with the aid of a computer into the data used to control and monitor the installation and additionally alternative means are used for the signal detection.

2. Method as claimed in claim 1, characterised in that the speed of movement of the cage (5) is detected by a pulse transmitter integrated into a bearing of the drive motor (1).

3. Method as claimed in claim 1 or 2, characterised in that the speed of the cage (5) is detected by a pulse transmitter integrated into a bearing of the cable pulley (2).

4. Method as claimed in one of claims 1 to 3, characterised in that the speed of the cage (5) is detected by a pulse transmitter integrated into a bearing of a deflector pulley (7).

5. Method as claimed in one claims 1 to 4, characterised in that the speed of the cage (5) is detected by a pulse transmitter integrated into a bearing of a guide pulley (8).

6. Method as claimed in one of claims 1 to 4, characterised in that the speed of the cage (5) is detected by at least two pulse transmitters integrated into the bearings of different guide pulleys (8) and that the detected values are compared with one another and averaged.

7. Method as claimed in one of claims 1 to 6, characterised in that the speed of the cage (5) is detected by a pulse transmitter integrated into a bearing of a deflection pulley (10,11) for a speed limiting cable (9).

8. Method as claimed in one of claims 1 to 7, characterised in that the position of the cage (5) is detected by using at least one of the pulse transmitters used in accordance with claims 1 to 7 and by converting the detected pulse count into the distance moved by the cage.

9. Method as claimed in one of claims 1 to 8, characterised in that the distance covered by the cage (5) is determined from the pulse values of at least one pulse transmitter integrated into a bearing of a guide pulley (8).

10. Method as claimed in claim 8 or 9, characterised in that the distance covered by the cage (5) is determined for a predetermined movement cycle in opposite directions and the detected values are compared with one another to compensate for measurement errors.

11. Method as claimed in one of claims 8 to 10, characterised in that cable slippage is detected by a comparison of the detected pulse counts of at least two pulse transmitters used in accordance with claims 1 to 7 and is compensated for by adapting the control values.

12. Method as claimed in one of claims 1 to 11, characterised in that the position of the cabin door is detected by at least one pulse transmitter integrated into a bearing in the drive for the cabin door and is included in the safety control of the lift installation.

13. Method as claimed in one of claims 1 to 12, characterised in that the position of a shaft door (13) is detected by at least one pulse transmitter integrated in the drive for the shaft door in question and is included in the security control of the lift installation.

14. Method as claimed in claim 12 or 13, characterised in that the condition of the door locking is detected by at least one pulse transmitter integrated in the drive for the door locking mechanism and is included in the security control of the lift installation.

15. Roller bearing for carrying out the method as claimed in one of claims 1 to 14, characterised in that integrated into one of the sealing rings (21), which axially cover the bearing gap, there is a sensor, opposed to which there is a magnetic ring fixed to the rotating bearing ring and the roller bearing has alternative means for signal detection.

16. Roller bearing as claimed in claim 15, characterised in that the inner ring (16) of the bearing is fixed and the outer ring (18) rotates.

17. Roller bearing as claimed in claim 15 or 16, characterised in that the roller bearing is constructed as a ball bearing.

18. Roller bearing for carrying out the method as claimed in one of claims 1 to 14, characterised in that the roller bearing has an integrated pulse transmitter and alternative means for signal detection.

19. Roller bearing as claimed in claim 18, characterised in that the alternative means for signal detection react to pressure waves.

20. Roller bearing as claimed in claim 18, characterised in that the alternative means for signal detection react to sound frequencies of the bearing.

21. Roller bearing for carrying out the method as claimed in one of claims 1 to 14, characterised in that the roller bearing has an integrated pulse transmitter and alternative means for signal detection, the pulse transmitter having a microlaser.

22. Roller bearing as claimed in claim 21, characterised in that the alternative means for signal detection include a glass fibre guide.

## Revendications

1. Procédé pour la commande et la surveillance du fonctionnement d'un ascenseur ou monte-charge, caractérisé en ce que l'on saisit les états de réglage de mouvements et/ou rotations d'éléments de construction rotatifs les uns par rapport aux autres à l'aide de générateurs d'impulsions qui sont intégrés dans des paliers à roulements entre ces parties de construction et en ce que les valeurs d'impulsions saisies sont transformés à l'aide d'un ordinateur en données servant à la commande et à la surveillance de l'installation et de plus des moyens en variante sont utilisés pour la saisie des signaux.

2. Procédé selon la revendication 1, caractérisé en ce que la vitesse de déplacement de la cabine d'ascenseur (5) est saisie par un générateur d'impulsions intégré dans un palier ou roulement du moteur d'entraînement (1).

3. Procédé selon la revendication 1 ou 2, caractérisé en ce que la vitesse de déplacement de la cabine d'ascenseur (5) est saisie par un générateur d'impulsions intégré dans un palier ou roulement de la poulie à câble (2).

4. Procédé selon une des revendications 1 à 3, caractérisé en ce que la vitesse de déplacement de la cabine d'ascenseur (5) est saisie par un générateur d'impulsions intégré dans un palier ou roulement d'une poulie de renvoi ou poulie de mouflage (7).

5. Procédé selon l'une des revendications 1 à 4, caractérisé en ce que la vitesse de déplacement de la cabine d'ascenseur (5) est saisie par un générateur d'impulsions intégré dans un palier ou roulement d'un rouleau de guidage (8).

6. Procédé selon l'une des revendications 1 à 4, caractérisé en ce que la vitesse de déplacement de la cabine d'ascenseur (5) est saisie par au moins deux générateurs d'impulsions intégrés dans le roulement ou palier de différents rouleaux de guidage (8) et en ce que les valeurs saisies sont comparées entre elles et mises en moyenne.

7. Procédé selon l'une des revendications 1 à 6, caractérisé en ce que la vitesse de déplacement de la cabine d'ascenseur (5) est saisie par un générateur d'impulsions intégré dans un palier ou roulement d'une poulie de renvoi (10, 11) pour un câble de limitation de vitesse 9.

8. Procédé selon l'une des revendications 1 à 7, caractérisé en ce que la position de la cabine d'ascenseur (5) est déterminée par l'utilisation d'au moins l'un des générateurs d'impulsions utilisés selon les revendications 1 à 7 et par conversion du nombre d'impulsions saisies en cours de déplacement de la cabine d'ascenseur.

9. Procédé selon l'une des revendications 1 à 8, caractérisé en ce que la distance parcourue par la cabine d'ascenseur (5) est saisie à partir des valeurs d'impulsions d'au moins un générateur d'impulsions intégré dans un roulement ou palier d'un rouleau de guidage (8).

10. Procédé selon la revendication 8 ou 9, caractérisé en ce que la distance parcourue par la cabine d'ascenseur (5) est saisie pour un cycle de marche déterminée dans les directions opposées et les valeurs obtenues sont comparées entre elles pour compenser les erreurs de mesure.

11. Procédé selon l'une des revendications 8 à 10, caractérisé en ce que par une comparaison des nombres d'impulsions saisies d'au moins deux générateurs d'impulsions utilisés selon les revendications 1 à 7, on saisit le glissement de câble et on procède à sa compensation par adaptation des valeurs de commande.

12. Procédé selon l'une des revendications 1 à 11, caractérisé en ce que par au moins un générateur d'impulsions intégré dans un palier ou roulement dans la commande de la porte de cabine, on saisit la position de la porte de cabine et on l'incorpore dans la commande de sécurité de l'ascenseur ou monte-charge.

13. Procédé selon l'une des revendications 1 à 12, caractérisé en ce que par au moins un générateur d'impulsions intégré dans un palier ou roulement dans l'entraînement de la porte du puits d'ascenseur (13) on saisit la position de la porte du puits concerné et on l'incorpore dans la commande de sécurité de l'ascenseur ou du monte-charge.

14. Procédé selon la revendication 12 ou 13, caractérisé en ce que par au moins un générateur d'impulsions intégré dans un palier ou roulement dans l'entraînement du mécanisme de verrouillage de la porte on saisit l'état du verrouillage de la porte et on l'incorpore dans la commande de sécurité de l'ascenseur ou monte-charge.

15. Palier à roulement pour la réalisation du procédé selon l'une des revendications 1 à 14, caractérisé en ce que un capteur est intégré dans l'une des bagues d'étanchéité (21) recouvrant axialement l'espace libre du palier, bague d'étanchéité à laquelle est opposé un anneau magnétique fixé à demeure sur l'anneau de roulement rotatif et en ce que le palier à roulement présente des moyens en variante pour la saisie des signaux.

16. Palier à roulement selon la revendication 15, caractérisé en ce que l'anneau interne (16) du palier est conçu de façon à être fixe et l'anneau extérieur (18) est conçu de façon à être rotatif.

17. Palier à roulement selon la revendication 15, ou 16, caractérisé en ce que le palier à roulement est conçu sous forme de roulement à billes.

18. Palier à roulement pour la réalisation du procédé selon une des revendications 1 à 14, caractérisé en ce que le palier à roulement présente un générateur d'impulsions intégré et des moyens en variante pour la saisie des signaux.

19. Palier à roulement selon la revendication 18, caractérisé en ce que les moyens en variante réagissent pour la saisie des signaux aux ondes de pression.

20. Palier à roulement selon la revendication 18, caractérisé en ce que les moyens en variante pour la saisie des signaux réagissent aux fréquences sonores du palier.

21. Palier à roulement pour la réalisation du procédé selon l'une des revendications 1 à 14, caractérisé en ce que le palier à roulement présente un générateur d'impulsions intégré et des moyens en variante pour la saisie des signaux, le générateur d'impulsions comportant un micro laser.

22. Palier à roulement selon la revendication 21, caractérisé en ce que les moyens en variante pour la saisie des signaux comprennent une conduite en fibres de verre.
